# FASCICULE DE BREVET EUROPEEN

(11) **EP 3 857 329 B1**
(45) Date de publication et mention de la délivrance du brevet: **11.01.2023**
(21) Numéro de dépôt: 19769538.0
(22) Date de dépôt: 20.09.2019
(51) Int. Cl.: G05G 5/03, G05G 9/047

(54) **DISPOSITIF DE COMMANDE DE VOL D'UN AERONEF**
VORRICHTUNG ZUR STEUERUNG DES FLUGS EINES FLUGZEUGS
DEVICE FOR CONTROLLING THE FLIGHT OF AN AIRCRAFT

(30) Priorité: 26.09.2018 FR 1858806
(43) Date de publication de la demande: 04.08.2021
(73) Titulaire: Safran Electronics & Defense, 75015 Paris (FR)
(72) Inventeur: LAWNICZAK, Rémi-Louis, 77550 MOISSY-CRAMAYEL92100 Boulogne-Billancourt (FR); JULIEN, Louis, 77550 MOISSY-CRAMAYEL (FR)
(74) Mandataire: Decorchemont, Audrey Véronique Christèle
(86) Numéro de dépôt international: PCT/EP2019/075381
(87) Numéro de publication internationale: WO 2020/064562

(56) Documents cités:
- EP-A1- 0 565 757
- FR-A1- 3 011 815

## Description

L'invention concerne un dispositif de commande de vol d'un aéronef.

### ARRIERE PLAN TECHNOLOGIQUE DE L'INVENTION

Les dispositifs de commande de vol pour aéronefs comportent usuellement un levier de commande qui est monté pivotant sur le bâti du dispositif de commande selon au moins deux axes de rotation perpendiculaires l'un par rapport à l'autre afin de pouvoir commander des mouvements de roulis et de tangage de l'aéronef. A cet effet, le levier de commande est relié mécaniquement ou électriquement à un ou plusieurs organes de pilotage de l'aéronef comme des gouvernes.

Afin d'assister le pilote dans la commande en roulis et en tangage de l'aéronef, il est connu des dispositifs de commande de vol qui comprennent des moteurs de commande associés au levier de sorte que, pour chaque mouvement de rotation du levier relativement au bâti, l'un des moteurs permette de simuler un retour d'effort au pilote dirigeant le levier. Le levier est ainsi manipulable facilement et sans effort par le pilote relativement aux dispositifs où la commande se fait par liaison mécanique directe entre le levier et les organes de pilotage.

Toutefois avec une telle architecture, l'effort ressenti au niveau du levier de commande pour une rotation autour de l'axe de tangage est généralement différent selon que le levier de commande est en outre incliné selon l'axe de roulis à droite ou à gauche.

Afin de pallier cet inconvénient de couplage, on a proposé d'avoir recours à un asservissement des moteurs de commande pour symétriser l'effort ressenti sur le levier de commande pour une rotation autour de l'axe de tangage, que le levier de commande soit en outre incliné sur l'axe de roulis.

Néanmoins ceci oblige à mettre au point un asservissement particulier limitant l'exploitation des moteurs employés. En outre, les moteurs doivent être surdimensionnés pour assurer cette symétrie d'effort ressorti.

Le document FR 3 011 815 A1 divulgue un dispositif de commande de vol et est considéré comme représentant l'art antérieur le plus proche.

### OBJET DE L'INVENTION

Un but de l'invention est de proposer un dispositif de commande de vol permettant d'obvier au moins en partie aux inconvénients précités.

### BREVE DESCRIPTION DE L'INVENTION

En vue de la réalisation de ce but on propose un dispositif de commande de vol d'un aéronef comportant un levier de commande associé à un bâti portant :
- une première platine reliée au bâti par une première liaison pivot autour d'un premier axe,
- une deuxième platine reliée à la première platine par une deuxième liaison pivot autour d'un deuxième axe qui est sensiblement perpendiculaire et sécant au premier axe, le levier de commande étant relié à la deuxième platine par une troisième liaison pivot autour d'un troisième axe qui est sensiblement perpendiculaire et sécant au premier axe et au deuxième axe,
- un premier arbre de transmission monté pivotant par rapport au bâti autour d'un quatrième axe et relié à au moins un premier organe moteur de commande déporté du bâti,
- un premier mécanisme de liaison du levier de commande au premier arbre de transmission de sorte que la rotation du levier de commande autour du premier axe provoque la rotation du premier arbre autour du quatrième axe, le premier arbre et le premier mécanisme de liaison étant reliés l'un à l'autre par une cinquième liaison pivot autour d'un cinquième axe incliné par rapport au premier axe et au quatrième axe,
- un deuxième arbre de transmission monté pivotant par rapport au bâti autour d'un sixième axe et relié à au moins un deuxième organe moteur de commande déporté du bâti,
- un deuxième mécanisme de liaison du levier de commande au deuxième arbre de transmission de sorte que la rotation du levier de commande autour du deuxième axe provoque la rotation du deuxième arbre autour du sixième axe, le deuxième arbre et le deuxième mécanisme de liaison étant reliés l'un à l'autre par une septième liaison pivot autour d'un septième axe incliné par rapport au deuxième axe et au sixième axe,
- une plateforme reliée au bâti par une huitième liaison pivot autour d'un huitième axe, le deuxième mécanisme de liaison étant monté pivotant sur la plateforme selon une neuvième liaison pivot autour du premier axe et étant monté pivotant sur le levier de commande selon une dixième liaison pivot autour du premier axe.

Par une telle conformation particulière du dispositif de commande de vol, le dispositif de commande de vol s'avère totalement découplé entre la commande selon le deuxième axe et le sixième axe et la commande selon le premier axe et le quatrième axe. La commande selon le premier axe et la commande selon le deuxième axe s'avèrent en outre symétriques.

Avec une telle architecture, l'effort ressenti au niveau du levier de commande pour une rotation autour du deuxième axe est donc naturellement sensiblement identique que le levier de commande soit en outre incliné selon l'axe de roulis à droite ou à gauche.

Ceci permet de s'affranchir d'une mise en place d'un asservissement particulier permettant de symétriser le retour d'efforts ressenti sur le levier de commande. L'invention permet naturellement un découplage et une symétrie du retour d'efforts ressenti sur le levier de commande.

Ceci facilite également l'agencement dans l'invention d'un système redondant de secours mécanique passif (optionnel) pour la création d'un retour d'effort ressenti sur le levier de commande.

Pour la présente demande, par « un axe A incliné par rapport à un axe B » on entend que l'axe A n'est ni parallèle ni perpendiculaire à l'axe B.

Optionnellement le sixième axe est sensiblement normal au plan défini par le premier axe et le deuxième axe lorsque le levier de commande est en position neutre.

Optionnellement le quatrième axe est sensiblement normal à un plan contenant le premier axe et le deuxième axe lorsque le levier de commande est en position neutre.

Optionnellement le premier axe, le deuxième axe, le troisième axe, le sixième axe, le septième axe et le huitième axe sont sensiblement concourants en un premier point et le premier axe, le quatrième axe (A) et le cinquième axe (C) sont sensiblement concourants en un deuxième point.

Optionnellement, le quatrième axe et le sixième axe (D) sont sensiblement parallèles.

Optionnellement le premier mécanisme est agencé pour relier le premier arbre à la première platine par une liaison cardan.

Optionnellement le deuxième mécanisme est agencé pour relier le deuxième arbre au levier de commande par une liaison cardan.

Optionnellement la deuxième platine entoure extérieurement la première platine.

Optionnellement les deux platines entourent extérieurement la plateforme.

Optionnellement le dispositif comporte au moins une butée pour limiter un mouvement du levier de commande autour du premier axe ou autour du deuxième axe, la butée étant conformée en un rouleau tournant.

### BREVE DESCRIPTION DES DESSINS

L'invention sera mieux comprise à la lumière de la description qui suit d'un mode de réalisation non limitatif de l'invention en référence aux figures ci-jointes, parmi lesquelles :
- la figure 1 est un schéma d'un dispositif de commande de vol selon un mode de réalisation particulier de l'invention,
- la figure 2 est une vue en perspective du dispositif schématisé à la figure 1,
- la figure 3 est une vue en coupe longitudinale du dispositif schématisé à la figure 1,
- la figure 4 est une vue en perspective d'une partie du dispositif schématisé à la figure 1, le levier de commande et la première platine du dispositif n'étant en particulier pas représentés,
- la figure 5 est une vue en perspective zoomée d'une partie du dispositif schématisé à la figure 1,
- la figure 6 est une variante de la butée illustrée à la figure 5.

### DESCRIPTION DETAILLEE DE L'INVENTION

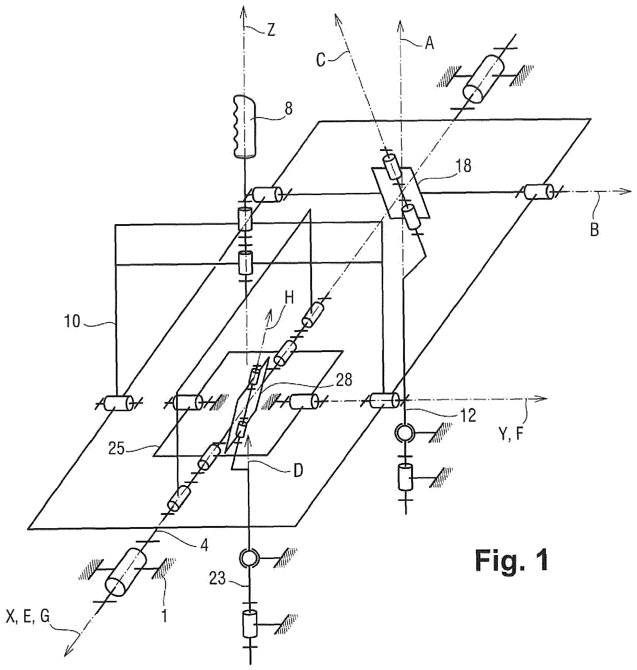

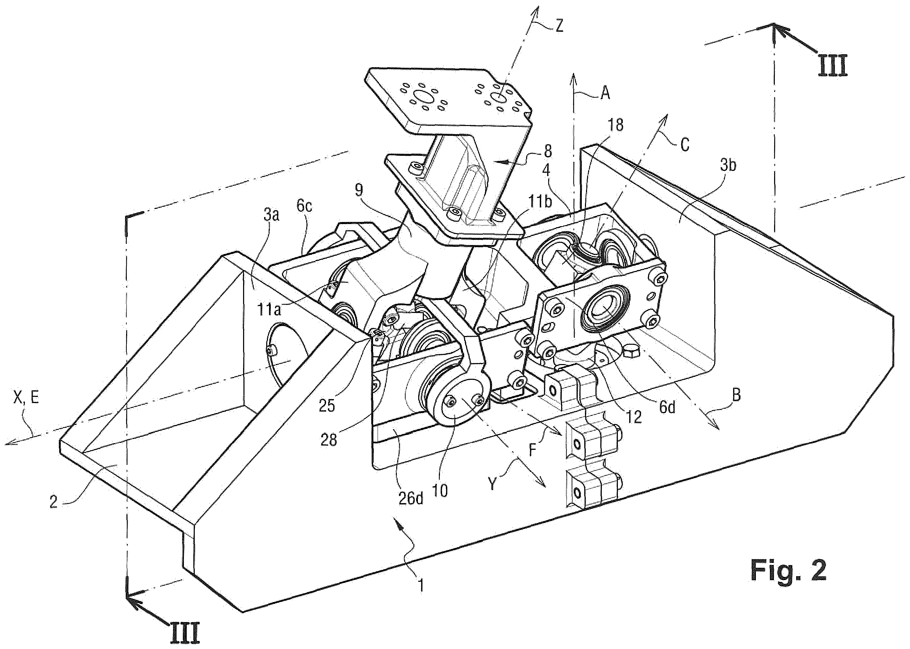

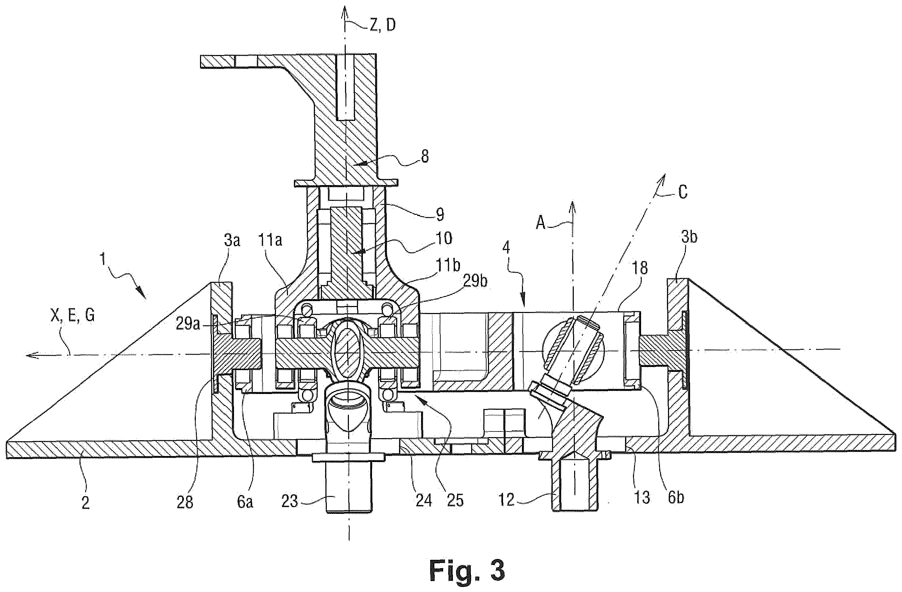

En référence aux figures 1 à 4, le dispositif de commande de vol selon le premier mode de réalisation de l'invention comporte un bâti 1. De façon particulière, le bâti 1 s'étend longitudinalement et comporte un plancher 2 et au moins deux parois latérales 3a, 3b opposées l'une à l'autre et s'étendant toutes deux à la verticale du plancher 2.

Le dispositif comporte en outre une première platine 4 qui a ici la forme générale d'un cadre allongé. La première platine 4 est directement liée au bâti 1 par une première liaison pivot de premier axe de rotation X. Le premier axe X est associé à l'axe de roulis de l'aéronef.

A cet effet, la première platine 4 est montée sur le bâti 1 par l'intermédiaire de deux roulements coaxiaux (non visibles ici) montés respectivement sur des parois latérales 3a, 3b opposées du bâti 1. La première platine 4 comporte ainsi deux parois latérales 6a, 6b parallèles aux parois latérales 3a, 3b du bâti 1 et deux parois longitudinales 6c, 6d s'étendant entre les parois latérales 6a, 6b de la première platine 4.

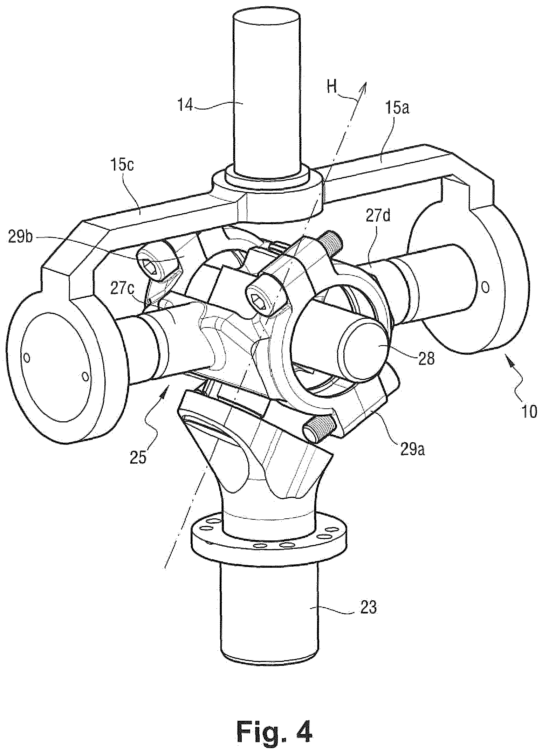

Le dispositif comporte en outre un levier de commande 8 qui est associé au bâti 1 et qui comporte ici un manche formant une extrémité libre du levier de commande. Le levier de commande 8 est lié à la première platine 4 par l'intermédiaire d'une deuxième platine 10 dont la forme est plus visible à la figure 4.

La deuxième platine 10 est directement liée à la première platine 4 par une deuxième liaison pivot de deuxième axe de rotation Y, le deuxième axe Y étant perpendiculaire et sécant au premier axe X. Le deuxième axe Y est associé à l'axe de tangage de l'aéronef.

A cet effet, la deuxième platine 10 du levier de commande 8 est montée sur la première platine 4 par l'intermédiaire de deux roulements coaxiaux (non visible ici) montés respectivement sur des parois longitudinales 6c, 6d opposées de la première platine 4. On notera que le deuxième axe Y est lié à la première platine 4, c'est-à-dire qu'un pivotement de la première platine 4 autour du premier axe X provoque un pivotement du deuxième axe Y autour du premier axe X.

La deuxième platine 10 est ici conformée de manière à être montée pivotante sur la première platine 4 à l'extérieur de la première platine 4. Ainsi, la deuxième platine 10 est montée sur la première platine 4 au niveau des faces externes des parois longitudinales 6c, 6d opposées de la première platine 4. Typiquement, la deuxième platine 10 comporte une embase de liaison 14 au levier de commande 8 à partir de laquelle s'étendent deux branches 15c, 15d chacune montée sur l'une respective des parois longitudinales 6c, 6d de la première platine 4. La deuxième platine 10 est donc globalement conformée en un cavalier.

Le levier de commande 8 est par ailleurs lié à la deuxième platine 10 par une troisième liaison pivot de troisième axe de rotation Z, le troisième axe Z étant perpendiculaire et sécant au premier axe X et au deuxième axe Y. A cet effet, le levier de commande 8 est monté sur l'embase de liaison 14 de la deuxième platine 10, embase de liaison 14 s'étendant elle-même selon le troisième axe Z, par l'intermédiaire de deux roulements coaxiaux (non visible ici).

On notera que le troisième axe Z est lié à la première platine 4, c'est-à-dire qu'un pivotement de la première platine 4 autour du premier axe X (ou du deuxième axe Y) provoque un pivotement du troisième axe Z autour du premier axe X (ou du deuxième axe Y).

Le levier de commande 8 est quant à lui ici conformé de manière à présenter une portion principale 9 qui s'étend selon le troisième axe Z et qui est montée pivotante sur l'embase de liaison 14. L'extrémité distale de la portion principale 9 est prolongée par une chape comprenant deux flancs opposés 11a, 11b. Les flancs 11a, 11b de la chape s'étendent ici parallèlement aux parois latérales 3a, 3b du bâti 1 lorsque le levier de commande 8 est en position neutre.

On note que les deux branches 15c, 15d de la deuxième platine 10 passent sous la portion principale 9 entre les deux flancs 11a, 11b de la chape pour atteindre la première platine 4.

Le dispositif comporte un premier arbre de transmission 12 directement lié au bâti 1 par une quatrième liaison pivot de quatrième axe de rotation A. A cet effet, le premier arbre de transmission 12 s'étend en partie à l'intérieur d'un perçage 13 du plancher 2 du bâti 1 et est monté pivotant dans le perçage 13 par l'intermédiaire de deux roulements coaxiaux (non visible ici).

Le premier arbre de transmission 12 est ici agencé de sorte que le quatrième axe A soit sécant avec le premier axe X. Le premier arbre de transmission 12 est en outre ici agencé de sorte que le quatrième axe A soit normal à un plan contenant le premier axe X et le deuxième axe Y lorsque le levier de commande 8 est en position neutre (soit lorsque le plan contenant le premier axe X et le deuxième axe Y est parallèle au plancher 2). Dans cette position neutre du levier de commande 8, le quatrième axe A est donc parallèle au troisième axe Z.

Le premier arbre 12 comporte une première extrémité. La première extrémité comprend une portion terminale rectiligne et une portion coudée de raccordement de la portion terminale rectiligne à la deuxième extrémité du deuxième arbre. La portion terminale rectiligne de la première extrémité s'étend donc obliquement par rapport au quatrième axe A et à la deuxième extrémité du deuxième arbre de transmission.

La deuxième extrémité du premier arbre 12 est reliée à un premier groupe de moteurs (non illustré ici) qui est déporté du bâti.

Le dispositif comporte en outre un premier mécanisme de liaison du levier de commande 8 au premier arbre de transmission 12 de sorte que la rotation du levier de commande 8 autour du premier axe X provoque la rotation du premier arbre de transmission 12 autour du quatrième axe A.

De préférence, le premier mécanisme de liaison relie le premier arbre de transmission 12 au levier de commande 8 par une liaison cardan.

Le premier mécanisme de liaison comporte ainsi ici une première croix 18 comprenant deux branches s'étendant perpendiculairement l'une à l'autre.

De façon particulière, le premier mécanisme de liaison est directement lié à la première platine 4 par une cinquième liaison pivot de cinquième axe de rotation B. A cet effet, une première extrémité de la première branche de la première croix 18 est montée sur l'une des parois longitudinales 6d de la première platine 4 par l'intermédiaire d'un premier roulement solidaire de ladite paroi longitudinale 6d et la deuxième extrémité de la première branche de la première croix 18 est montée sur l'autre paroi longitudinale 6c de la première platine 4 par l'intermédiaire d'un deuxième roulement solidaire de ladite paroi longitudinale 6c, le premier roulement et le deuxième roulement étant coaxiaux. De la sorte la première branche s'étend transversalement dans la première platine 4 entre les deux parois longitudinales 6c, 6d de la première platine 4.

La première croix 18 est agencée de sorte que le cinquième axe B soit concourant avec le premier axe X et le quatrième axe A et s'étende parallèlement au deuxième axe Y lorsque le levier de commande 8 est dans sa position neutre.

La deuxième branche de la première croix 18 est ici pourvue d'un perçage central s'étendant sur toute la longueur de la deuxième branche. Le premier arbre de transmission 12 est directement lié à la première croix 18 par une sixième liaison pivot de cinquième axe de rotation C. A cet effet, la portion terminale rectiligne du premier arbre de transmission 12 s'étend à l'intérieur de la deuxième branche et est montée pivotante dans le perçage central de la deuxième branche par l'intermédiaire de deux roulements coaxiaux.

Le dispositif est agencé de sorte que le sixième axe C est incliné par rapport au premier axe X, au quatrième axe A et au cinquième axe B, et est sécant au premier axe X, au quatrième axe A et au cinquième axe B. Le premier arbre de transmission 12 est ici conformé de sorte que la portion terminale rectiligne s'étende à 25 degrés de la deuxième extrémité du premier arbre de transmission 12, le sixième axe C s'étendant alors ici à 25 degrés du quatrième axe A.

De par la forme particulière coudée du premier arbre de transmission 12, il est ainsi possible d'autoriser une liaison pivot entre le premier arbre 12 et le premier mécanisme de liaison qui soit d'axe incliné notamment par rapport au premier axe X et au quatrième axe A.

La transmission du couple entre le levier de commande 8 et le premier arbre de transmission 12 se fait ainsi par l'intermédiaire de la première platine 4 et de la première croix 18. Lorsque le levier de commande 8 est déplacé par le pilote autour du premier axe de rotation X, la première platine 4 est également entraînée en rotation relativement au bâti 1 autour du premier axe de rotation X ce qui entraîne, de par la liaison cardan créée par la première croix 18, une rotation du premier arbre de transmission 12 autour du quatrième axe A.

Le dispositif comporte un deuxième arbre de transmission 23 directement lié au bâti 1 par une septième liaison pivot de septième axe de rotation D. A cet effet, le deuxième arbre de transmission 23 s'étend en partie à l'intérieur d'un perçage 24 du plancher 2 du bâti 1 et est monté pivotant dans le perçage 24 par l'intermédiaire de deux roulements coaxiaux (non visible ici).

Le deuxième arbre de transmission 23 est ici agencé de sorte que le septième axe D soit sécant avec le premier axe X et le deuxième axe Y. Le deuxième arbre de transmission 23 est en outre ici agencé de sorte que le septième axe D soit normal au plan contenant le premier axe X et le deuxième axe Y lorsque le levier de commande 8 est en position neutre (soit lorsque le plan contenant le premier axe X et le deuxième axe Y est parallèle au plancher 2).

Le septième axe D est ainsi parallèle au quatrième axe A de sorte que le premier arbre de transmission 12 et le deuxième arbre de transmission 23 s'étendent parallèlement l'un à l'autre.

Le deuxième arbre 23 comporte une première extrémité. La première extrémité comprend une portion terminale rectiligne et une portion coudée de raccordement de la portion terminale rectiligne à la deuxième extrémité du deuxième arbre 23. La portion terminale rectiligne de la première extrémité s'étend donc obliquement au septième axe D et à la deuxième extrémité.

La deuxième extrémité du deuxième arbre 23 est reliée à un deuxième groupe de moteurs (non illustré ici) qui est déporté du bâti.

Le dispositif comporte en outre un deuxième mécanisme de liaison du levier de commande 8 au deuxième arbre de transmission 23 de sorte que la rotation du levier de commande 8 autour du deuxième axe Y provoque la rotation du deuxième arbre de transmission 23 autour du septième axe D.

De préférence, le deuxième mécanisme de liaison relie le deuxième arbre de transmission 23 au levier de commande 8 par une liaison cardan.

Le deuxième mécanisme de liaison comporte ici une deuxième croix 28 comprenant deux branches s'étendant perpendiculairement l'une à l'autre.

De façon particulière, le deuxième mécanisme de liaison est directement lié au levier de commande 8 par une huitième liaison pivot de huitième axe de rotation E qui est ici confondu avec le premier axe de rotation X. A cet effet, une première extrémité de la première branche de la deuxième croix 28 est montée sur l'un des flancs 11a de la chape du levier de commande 8 par l'intermédiaire d'un premier roulement (non visible ici) et la deuxième extrémité de la première branche de la deuxième croix 28 est montée sur l'autre flanc 11b de la chape du levier de commande 8 par l'intermédiaire d'un deuxième roulement (non visible ici), le premier roulement et le deuxième roulement étant coaxiaux. De la sorte la première branche de la deuxième croix 28 s'étend longitudinalement dans le bâti 1 entre les flancs de la chape du levier de commande 8.

Par ailleurs, le deuxième mécanisme de liaison est lié au bâti 1 par l'intermédiaire d'une plateforme 25 du dispositif. La plateforme 25 est directement liée au bâti par une neuvième liaison pivot de neuvième axe de rotation F. Le neuvième axe de rotation F est confondu avec le deuxième axe de rotation Y lorsque le levier de commande 8 est en position neutre (soit lorsque le plan contenant le premier axe X et le deuxième axe Y est parallèle au plancher 2).

A cet effet, le bâti 1 comporte deux brides 26d latérales (une seule étant référencée sur les figures ici) s'étendant chacune à la normale du plancher 2 du bâti 1. La plateforme 25 comporte de façon correspondante deux doigts 27c, 27d, un premier doigt 27c étant monté pivotant sur l'une des brides par l'intermédiaire d'un roulement (non visible ici) et un deuxième doigt 27d étant monté pivotant sur l'autre des brides 26d par l'intermédiaire d'un roulement (non visible ici), le premier roulement et le deuxième roulement étant coaxiaux.

De la sorte la plateforme 25 s'étend transversalement dans le bâti 1 entre les deux brides 26d.

De façon particulière, les deux brides 26d s'étendent entre la plateforme 25 d'une part et la première platine 4 d'autre part.

De par le positionnement desdites brides, la plateforme 25 est ainsi entourée extérieurement par lesdites brides 26d mais également d'une part par la première platine 4, qui entoure elle-même extérieurement les deux brides 26d, et d'autre part par la deuxième platine 10 qui entoure elle-même extérieurement la première platine 4.

Par ailleurs, le deuxième mécanisme de liaison est directement lié à la plateforme 25 par une dixième liaison pivot de dixième axe de rotation G qui est ici confondu avec le premier axe de rotation X. A cet effet, une première extrémité de la première branche de la deuxième croix 28 est montée sur l'une des parois latérales 29a de la plateforme 25 par l'intermédiaire d'un premier roulement (non visible ici) et la deuxième extrémité de la première branche de la deuxième croix 28 est montée sur l'autre des parois latérales 29b de la plateforme 25 (opposée à la paroi latérale 29a) par l'intermédiaire d'un deuxième roulement (non visible ici), le premier roulement et le deuxième roulement étant coaxiaux. De la sorte la première branche de la deuxième croix 28 s'étend longitudinalement dans le bâti 1 entre les deux parois latérales 29a, 29b de la plateforme 25.

De par le positionnement de la plateforme 25, la deuxième croix 28 est entourée extérieurement par lesdites parois latérales 29a, 29b mais également d'une part par le levier de commande 8 dont les flancs 11a, 11b entourent elle-même extérieurement les deux parois latérales 29a, 29b de la plateforme 25 et d'autre part par la première platine 4 qui entoure elle-même extérieurement le levier de commande 8.

La deuxième branche de la deuxième croix 28 est ici pourvue d'un perçage central s'étendant sur toute la longueur de la deuxième branche. Le deuxième arbre de transmission 23 est directement lié à la deuxième croix 28 par une onzième liaison pivot de onzième axe de rotation H. A cet effet, la première extrémité coudée du deuxième arbre de transmission 23 s'étend à l'intérieur de la deuxième branche et est montée pivotante dans le perçage central de la deuxième branche par l'intermédiaire de deux roulements coaxiaux.

Le dispositif est agencé de sorte que le onzième axe H est incliné par rapport au premier axe X, au deuxième axe Y et au septième axe D, et est sécant au premier axe X, au deuxième axe Y et au septième axe D. Le deuxième arbre de transmission 23 est ici conformé de sorte que la première extrémité coudée s'étende à 25 degrés du deuxième arbre de transmission 23, le onzième axe H s'étendant ainsi ici alors à 25 degrés par rapport au sixième axe D.

De par la forme particulière coudée du deuxième arbre de transmission 23 il est ainsi possible d'autoriser une liaison pivot entre le deuxième arbre 23 et le deuxième mécanisme de liaison qui soit d'axe incliné notamment par rapport au deuxième axe Y et au septième axe D.

La transmission du couple entre le levier de commande 8 et le deuxième arbre de transmission 23 se fait ainsi par l'intermédiaire uniquement de la deuxième croix 28. Lorsque le levier de commande 8 est déplacé par le pilote autour du deuxième axe de rotation Y cela entraîne, de par la liaison cardan créée par la deuxième croix 28, une rotation du deuxième arbre de transmission 23 autour du septième axe D. Ceci n'entraine toutefois pas de rotation du premier arbre de rotation 12 autour du quatrième axe A.

Grâce à la configuration du dispositif et notamment au fait que le deuxième arbre de transmission 23 soit porté par la plateforme 25 elle-même reliée au bâti 1, on note que lorsque le levier de commande 8 est déplacé par le pilote autour du premier axe de rotation X, cela entraîne seulement une rotation du premier arbre de transmission 12 autour du quatrième axe A. En particulier, ceci n'entraîne pas de rotation du deuxième arbre de transmission 23 autour du septième axe D.

Le dispositif décrit permet ainsi de découpler complètement le mouvement de pivotement du levier de commande 8 autour du premier axe X du mouvement de pivotement du deuxième arbre de transmission 23 autour du septième axe D ainsi que le mouvement de pivotement du levier de commande 8 autour du deuxième axe Y du mouvement de pivotement du premier arbre de transmission 12 autour du quatrième axe A.

On assure également ainsi une symétrie des efforts exercés sur les deux arbres de transmission 12 et 23.

On note que la deuxième platine 10 est associée au contrôle en roulis et la plateforme 25 au contrôle en tangage du dispositif. La deuxième platine 10 guidant le mouvement en roulis est ainsi agencée à l'extérieur de la plateforme 25 guidant le mouvement en tangage.

En outre, le dispositif selon le premier mode de réalisation de l'invention comporte seulement onze liaisons pivots et huit éléments principaux (premier arbre de transmission 12, deuxième arbre de transmission 23, première croix 18, deuxième croix 28, première platine 4, deuxième platine 10, plateforme 25 et levier de commande 8) tout en permettant d'associer un groupe de moteurs aux mouvements de rotation du levier de commande 8 relativement au bâti 1 selon le premier axe X et le deuxième axe Y. Le dispositif selon le mode de réalisation particulier de l'invention s'avère donc de construction simplifiée.

En outre, les différents éléments du dispositif sont uniquement liés les uns par rapport aux autres par des roulements. Ceci permet de simplifier le dispositif et de le rendre plus fiable. En effet, on s'affranchit ainsi d'engrenages sensibles au grippage ou de courroies sensibles aux ruptures ou de liaisons linéaires plus sensibles à l'usure.

De préférence, le dispositif est agencé de sorte que le premier axe X, le deuxième axe Y, le troisième axe Z, le septième axe D, le huitième axe E, le neuvième axe F, le dixième axe G et le onzième axe H sont tous concourants en un premier point et le premier axe X, le quatrième axe A, le cinquième axe B, le sixième axe C sont tous concourants en un deuxième point.

Ainsi, les différents axes de pivotement du dispositif sont concourants en uniquement deux points ce qui permet d'avoir un dispositif particulièrement compact.

Selon un aspect particulier, pour limiter les mouvements de pivotement du levier de commande 8 autour du premier axe X, le dispositif comporte au moins une butée de limitation de course. De préférence, le dispositif comporte une première paire de butées de limitation de course du levier de commande 8 autour du premier axe X.

Lesdites butées sont ici agencées entre la première platine 4 et le bâti 1 de manière que la première platine 4 vienne appuyer en service contre les butées pour limiter le mouvement du levier de commande autour du premier axe X. Typiquement lesdites butées sont agencées au niveau de la liaison entre la première platine 4 et le bâti 1. Par exemple, lesdites butées sont respectivement portées par les parois latérales opposées 3a, 3b du bâti 1.

Par ailleurs, pour limiter les mouvements de pivotement du levier de commande 8 autour du deuxième axe Y, le dispositif comporte au moins une butée de limitation de course du levier de commande 8 autour du deuxième axe Y. De préférence, le dispositif comporte une deuxième paire de butées de limitation de course du levier de commande 8 autour du deuxième axe Y.

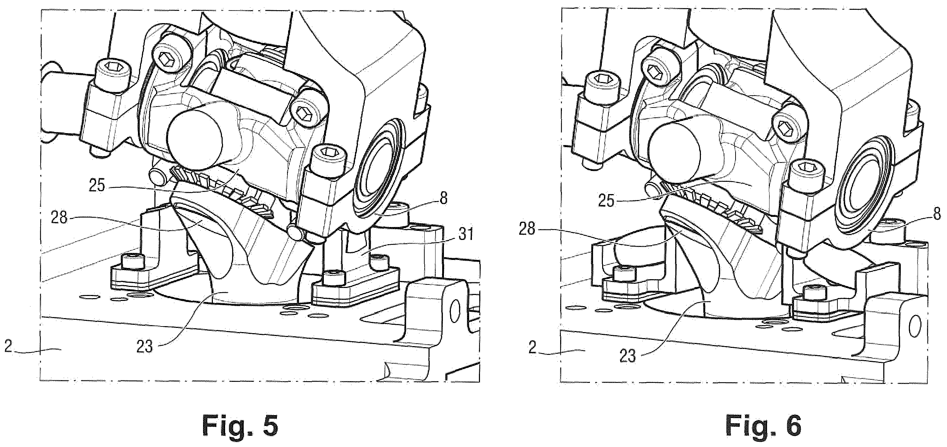

Comme illustré à la figure 5, lesdites butées 31 sont ici agencées entre le levier de commande 8 et le bâti 1 de manière que le levier de commande 8 vienne appuyer en service contre les butées 31 pour limiter le mouvement du levier de commande autour du deuxième axe Y. Typiquement lesdites butées 31 sont agencées au niveau de la liaison entre le levier de commande 8 et les deuxièmes moyens de transmission. Chaque butée 31 est par exemple fixée au plancher 2 du bâti 1 de manière à s'étendre entre les deux brides 26d dudit bâti 1. La surface de chaque butée 31 destinée à recevoir la surface correspondante du levier de commande 8 est par exemple arrondie pour épouser la forme de la surface correspondante du levier de commande 8.

Bien entendu l'invention n'est pas limitée au mode de réalisation décrit et on peut y apporter des variantes sans sortir du cadre de l'invention tel que défini par les revendications.

Par position neutre, on entendra de façon générale la position du levier de commande dans laquelle aucun effort n'est exercé sur le levier de commande de sorte que si le dispositif reposait sur une surface plane le plan formé par le premier axe et le deuxième axe serait parallèle à ladite surface. Ainsi, dans la position neutre, le levier de commande n'est typiquement pas incliné selon le premier axe ni incliné selon le deuxième axe ni incliné selon le troisième axe.

Bien que dans le mode de réalisation décrit, la portion coudée de l'un des arbres de transmission s'étende à 25 degrés du reste de l'arbre de transmission correspondant, la portion coudée pourra être conformée avec un autre angle De façon générale on décidera d'une géométrie particulière des mécanismes de liaison et/ou des arbres de transmission pour adapter l'inclinaison du sixième axe et du onzième axe.

Bien qu'ici le levier de commande soit relié à la deuxième platine par une liaison pivot d'autres configurations seront envisageables. Par exemple, le levier de commande pourra être relié à la deuxième platine par une liaison linéaire rectiligne soit directement (les deux pièces sont alors en contact) soit par l'intermédiaire d'autres pièces.

Bien entendu pour toute la présente demande lorsque deux pièces sont montées mobiles l'une par rapport à l'autre cela peut se faire directement (les deux pièces sont alors en contact) ou par l'intermédiaire d'autres pièces.

L'une ou l'autre des pièces liées par une liaison pivot pourront indifféremment porter le ou les roulements ou tout autre moyen nécessaire à la réalisation de la liaison pivot entre les deux pièces.

Le dispositif pourra comporter un système redondant de secours mécanique passif pour la création d'un retour d'effort ressenti sur le levier de commande. Ceci sera facilité par le découplage et la symétrie des efforts exercés sur les arbres de transmission du dispositif.

Le dispositif pourra comporter d'autres butées que celles décrites. Par exemple le nombre et/ou l'emplacement et/ou la forme de ou des butées pour limiter le déplacement du levier de commande autour du premier axe et/ou du deuxième axe pourront être modifiés. Ainsi on pourra agencer la au moins une butée pour limiter le mouvement du levier de commande autour du premier axe de manière que ce soit le levier de commande ou la deuxième platine qui vienne en contact avec la butée et non la première platine. On pourra par exemple agencer la au moins une butée pour limiter le mouvement du levier de commande autour du premier axe au niveau des brides du bâti et/ou de la plateforme. Par ailleurs, on pourra agencer la au moins une butée pour limiter le mouvement du levier de commande autour du deuxième axe de manière que ce soit la plateforme qui vienne en contact avec la butée et non le levier de commande. On pourra par exemple agencer la au moins une butée pour limiter le mouvement du levier de commande autour du premier axe au niveau des brides du bâti et/ou de la plateforme. En place d'une surface plane ou arrondi, comme illustré à la figure 6, chaque butée (associée au premier axe ou au deuxième axe) pourra prendre une autre forme comme par exemple celle d'un rouleau tournant. Ceci permettra de limiter l'usure de ladite butée.

## Revendications

1. Dispositif de commande de vol d'un aéronef comportant un levier de commande (8) associé à un bâti (1) portant :
- une première platine (4) reliée au bâti par une première liaison pivot autour d'un premier axe (X),
- une deuxième platine (10) reliée à la première platine (4) par une deuxième liaison pivot autour d'un deuxième axe (Y) qui est sensiblement perpendiculaire et sécant au premier axe, le levier de commande (8) étant relié à la deuxième platine (10) par une troisième liaison pivot autour d'un troisième axe (Z) qui est sensiblement perpendiculaire et sécant au premier axe et au deuxième axe,
- un premier arbre de transmission (12) monté pivotant par rapport au bâti autour d'un quatrième axe (A) et relié à au moins un premier organe moteur de commande déporté du bâti,
- un premier mécanisme de liaison du levier de commande au premier arbre de transmission de sorte que la rotation du levier de commande autour du premier axe (X) provoque la rotation du premier arbre autour du quatrième axe (A), le premier arbre et le premier mécanisme de liaison étant reliés l'un à l'autre par une cinquième liaison pivot autour d'un cinquième axe (C) incliné par rapport au premier axe (X) et au quatrième axe (A),
- un deuxième arbre de transmission (23) monté pivotant par rapport au bâti autour d'un sixième axe (D) et relié à au moins un deuxième organe moteur de commande déporté du bâti,
- un deuxième mécanisme de liaison du levier de commande au deuxième arbre de transmission de sorte que la rotation du levier de commande autour du deuxième axe (Y) provoque la rotation du deuxième arbre autour du sixième axe (D), le deuxième arbre et le deuxième mécanisme de liaison étant reliés l'un à l'autre par une septième liaison pivot autour d'un septième axe (H) incliné par rapport au deuxième axe et au sixième axe,
- une plateforme (25) reliée au bâti par une huitième liaison pivot autour d'un huitième axe (F), le deuxième mécanisme de liaison étant monté pivotant sur la plateforme (25) selon une neuvième liaison pivot autour du premier axe et étant monté pivotant sur le levier de commande (8) selon une dixième liaison pivot autour du premier axe.

2. Dispositif selon la revendication 1 agencé de sorte que le sixième axe (D) soit sensiblement normal au plan défini par le premier axe (X) et le deuxième axe (Y) lorsque le levier de commande est en position neutre.

3. Dispositif selon la revendication 1 ou la revendication 2, agencé de sorte que le quatrième axe (A) soit sensiblement normal à un plan contenant le premier axe (X) et le deuxième axe (Y) lorsque le levier de commande est en position neutre.

4. Dispositif selon l'une des revendications précédentes, agencé de sorte que le premier axe (X), le deuxième axe (Y), le troisième axe (Z), le sixième axe (D), le septième axe (H) et le huitième axe (F) soient sensiblement concourants en un premier point et le premier axe, le quatrième axe (A) et le cinquième axe (C) soient sensiblement concourants en un deuxième point.

5. Dispositif selon l'une des revendications précédentes, agencé de sorte que le quatrième axe (A) et le sixième axe (D) soient sensiblement parallèles.

6. Dispositif selon l'une des revendications 1 à 5, dans lequel le premier mécanisme est agencé pour relier le premier arbre (12) à la première platine (4) par une liaison cardan.

7. Dispositif selon l'une des revendications 1 à 6, dans lequel le deuxième mécanisme est agencé pour relier le deuxième arbre (23) au levier de commande (8) par une liaison cardan.

8. Dispositif selon l'une des revendications précédentes, dans lequel la deuxième platine (10) entoure extérieurement la première platine (4).

9. Dispositif selon l'une des revendications précédentes, dans lequel les deux platines entourent extérieurement la plateforme (25).

10. Dispositif selon l'une des revendications précédentes, comprenant au moins une butée pour limiter un mouvement du levier de commande (8) autour du premier axe ou autour du deuxième axe, la butée étant conformée en un rouleau tournant.

## Patentansprüche

1. Vorrichtung zur Steuerung des Flugs eines Luftfahrzeugs, umfassend einen Steuerhebel (8), der mit einem Körper (1) verbunden ist, welcher trägt:
- eine erste Platte (4), die mit dem Körper über eine erste Schwenkverbindung um eine erste Achse (X) verbunden ist,
- eine zweite Platte (10), die mit der ersten Platte (4) über eine zweite Schwenkverbindung um eine zweite Achse (Y), die im Wesentlichen senkrecht zur ersten Achse ist und diese schneidet, verbunden ist, wobei der Steuerhebel (8) mit der zweiten Platte (10) über eine dritte Schwenkverbindung um eine dritte Achse (Z) verbunden ist, die im Wesentlichen senkrecht zur ersten Achse und zur zweiten Achse ist und diese schneidet,
- eine erste Antriebswelle (12), die in Bezug auf den Körper um eine vierte Achse (A) schwenkbar gelagert ist und mit mindestens einem ersten Steuerantriebsorgan, das sich außerhalb des Körpers befindet, verbunden ist,
- ein erster Verbindungsmechanismus zum Verbinden des Steuerhebels mit der ersten Antriebswelle, derart, dass die Drehung des Steuerhebels um die erste Achse (X) die Drehung der ersten Welle um die vierte Achse (A) bewirkt, wobei die erste Welle und der erste Verbindungsmechanismus miteinander über eine fünfte Schwenkverbindung um eine fünfte Achse (C) verbunden sind, die in Bezug auf die erste Achse (X) und die vierte Achse (A) geneigt ist,
- eine zweite Antriebswelle (23), die in Bezug auf den Körper um eine sechste Achse (D) schwenkbar gelagert und mit mindestens einem zweiten Steuerantriebsorgan, das sich außerhalb des Körpers befindet, verbunden ist,
- ein zweiter Verbindungsmechanismus zum Verbinden des Steuerhebels mit der zweiten Antriebswelle, derart, dass die Drehung des Steuerhebels um die zweite Achse (Y) die Drehung der zweiten Welle um die sechste Achse (D) bewirkt, wobei die zweite Welle und der zweite Verbindungsmechanismus miteinander über eine siebte Schwenkverbindung um eine siebte Achse (H) verbunden sind, die in Bezug auf die zweite Achse und die sechste Achse geneigt ist,
- eine Platte (25), die mit dem Körper über eine achte Schwenkverbindung um eine achte Achse (F) verbunden ist, wobei der zweite Verbindungsmechanismus an der Platte (25) gemäß einer neunten Schwenkverbindung um die erste Achse schwenkbar gelagert ist und am Steuerhebel (8) gemäß einer zehnten Schwenkverbindung um die erste Achse schwenkbar gelagert ist.

2. Vorrichtung nach Anspruch 1, die derart ausgebildet ist, dass die sechste Achse (D) im Wesentlichen senkrecht zu der Ebene ist, die von der ersten Achse (X) und der zweiten Achse (Y) definiert ist, wenn der Steuerhebel in neutraler Position ist.

3. Vorrichtung nach Anspruch 1 oder Anspruch 2, die derart ausgebildet ist, dass die vierte Achse (A) im Wesentlichen senkrecht zu einer Ebene ist, die die erste Achse (X) und die zweite Achse (Y) enthält, wenn der Steuerhebel in neutraler Position ist.

4. Vorrichtung nach einem der vorhergehenden Ansprüche, die derart ausgebildet ist, dass die erste Achse (X), die zweite Achse (Y), die dritte Achse (Z), die sechste Achse (D), die siebte Achse (H) und die achte Achse (F) im Wesentlichen in einem ersten Punkt zusammenfallen und die erste Achse, die vierte Achse (A) und die fünfte Achse (C) im Wesentlichen in einem zweiten Punkt zusammenfallen.

5. Vorrichtung nach einem der vorhergehenden Ansprüche, die derart ausgebildet ist, dass die vierte Achse (A) und die sechste Achse (D) im Wesentlichen parallel sind.

6. Vorrichtung nach einem der Ansprüche 1 bis 5, bei der der erste Mechanismus ausgebildet ist, die erste Welle (12) mit der ersten Platte (4) über eine Kardanverbindung zu verbinden.

7. Vorrichtung nach einem der Ansprüche 1 bis 6, bei der der zweite Mechanismus ausgebildet ist, die zweite Welle (23) mit dem Steuerhebel (8) über eine Kardanverbindung zu verbinden.

8. Vorrichtung nach einem der vorhergehenden Ansprüche, bei der die zweite Platte (10) die erste Platte (4) außen umgibt.

9. Vorrichtung nach einem der vorhergehenden Ansprüche, bei der die beiden Platten die Platte (25) außen umgeben.

10. Vorrichtung nach einem der vorhergehenden Ansprüche, umfassend mindestens einen Anschlag zum Begrenzen einer Bewegung des Steuerhebels (8) um die erste Achse oder um die zweite Achse, wobei der Anschlag zu einer sich drehenden Rolle geformt ist.

## Claims

1. An aircraft flight control device comprising a control lever (8) associated with a body (1) carrying:
· a first plate (4) connected to the body by a first pivot connection about a first axis (X);
· a second plate (10) connected to the first plate (4) by a second pivot connection about a second axis (Y) that is substantially perpendicular to the first axis and that intersects it, the control lever (8) being connected to the second plate (10) by a third pivot connection about a third axis (Z) that is substantially perpendicular to the first and second axes, and that intersects them;
· a first transmission shaft (12) mounted to pivot relative to the body about a fourth axis (A) and connected to at least one first control motor member outside the body;
· a first connection mechanism connecting the control lever to the first transmission shaft in such a manner that pivoting of the control lever about the first axis (X) causes the first shaft to pivot about the fourth axis (A), the first shaft and the first connection mechanism being connected to each other by a fifth pivot connection about a fifth pivot axis (C) that is inclined relative to the first axis (X) and to the fourth axis (A) ;
· a second transmission shaft (23) mounted to pivot relative to the body about a sixth axis (D) and connected to at least one second control motor member outside the body;
· a second connection mechanism connecting the control lever to the second transmission shaft in such a manner that pivoting of the control lever about the second axis (Y) causes the second shaft to pivot about the sixth axis (D), the second shaft and the second connection mechanism being connected to each other by a seventh pivot connection about a seventh axis (H) that is inclined relative to the second axis and to the sixth axis; and
· a platform (25) connected to the body by an eighth pivot connection about an eighth axis (F), the second connection mechanism being pivotally mounted on the platform (25) by a ninth pivot connection about the first axis and being pivotally mounted on the control lever (8) by a tenth pivot connection about the first axis.

2. A device according to claim 1 arranged in such a manner that, when the control lever is in a neutral position, the sixth axis (D) is substantially normal to the plane defined by the first axis (X) and the second axis (Y).

3. A device according to claim 1 or claim 2, arranged in such a manner that, when the control lever is in a neutral position, the fourth axis (A) is substantially normal to a plane containing the first axis (X) and the second axis (Y).

4. A device according to any preceding claim, arranged in such a manner that the first axis (X), the second axis (Y), the third axis (Z), the sixth axis (D), the seventh axis (H), and the eighth axis (F) are substantially concurrent at a first point, and the first axis, the fourth axis (A), and the fifth axis (C), are substantially concurrent at a second point.

5. A device according to any preceding claim, arranged in such a manner that the fourth axis (A) and the sixth axis (D) are substantially parallel.

6. A device according to any one of claims 1 to 5, wherein the first connection mechanism is arranged to connect the first shaft (12) to the first plate (4) by a Cardan joint.

7. A device according to any one of claims 1 to 6, wherein the second connection mechanism is arranged to connect the second shaft (23) to the control lever (8) by a Cardan joint.

8. A device according to any preceding claim, wherein the second plate (10) surrounds the first plate (4) externally.

9. A device according to any preceding claim, wherein both plates surround the platform (25) externally.

10. A device according to any preceding claim, including at least one abutment for limiting movement of the control lever (8) about the first axis or about the second axis, the abutment being in the form of a rotary roller.
